# EUROPÄISCHE PATENTANMELDUNG

(11) **EP 1 511 276 A2**
(43) Veröffentlichungstag der Anmeldung: **02.03.2005**
(21) Anmeldenummer: 04103575.9
(22) Anmeldetag: 26.07.2004
(51) Int. Cl.: H04M 1/02, G09F 3/20

(54) **Telekommunikationsgerät mit einer Halterung zum Einschieben von Registerkarten**

(30) Priorität: 29.08.2003 DE 10339896
(71) Anmelder: SIEMENS AKTIENGESELLSCHAFT, 80333 München (DE)
(72) Erfinder: Grewe, Thomas, 48653, Coesfeld (DE); Münscher, Wolfgang, 81241, München (DE)

(57) **Zusammenfassung**

Die Erfindung betrifft ein Telekommunikationsgerät (1) mit einem Gehäuse (2) und mit einer Vorrichtung (3) zu Halten einer Registerkarte (4), wobei die Vorrichtung zumindest einen Schlitz (5) in dem Gehäuse zur Aufnahme der Registerkarte aufweist, so dass die Registerkarte in das Gehäuse einschiebbar ist.

## Beschreibung

Die Erfindung betrifft ein Telekommunikationsgerät mit einem Gehäuse und mit einer Vorrichtung zu Halten einer Registerkarte.

Registerkarten dienen bei Telekommunikationsgeräten, wie insbesondere Festnetztelefone oder Faxgeräte, zur festen Zuordnung von Namen und damit Telefonnummern zu Tasten auf dem Telekommunikationsgerät. Durch das Drücken einer einzigen Taste, der eine Telefonnummer fest zugeordnet ist, kann diese zugeordnete Telefonnummer angewählt werden. Auf diese Art und Weise können häufig gewählte oder bevorzugte Telefonnummern mehreren Tasten eines Telekommunikationsgerätes zugeordnet werden, so dass diese durch nur einen Tastendruck angewählt werden können. Hierdurch wird eine manuelle Eingabe bestimmter Telefonnummern umgangen.

Es ist bei Festnetztelefonen oder Faxgeräten bekannt Registerkarten, die meist aus Pappe, Papier oder einer Kunststofffolie sind, in eine vertiefte Fläche auf der Oberseite des Telekommunikationsgerätes einzulegen und zu befestigen oder anzukleben. Meist wird eine aus Papier bestehende Registerkarte in die Vertiefung auf der Oberseite des Telekommunikationsgerätes eingelegt und durch eine durchsichtige flexible Kunststofffolie in dieser Vertiefung gehalten. Diese durchsichtige flexible Kunststofffolie wird an der Oberseite des Gehäuses des Telekommunikationsgerätes befestigt.

Nachteilig an dieser Art der Halterung der Registerkarte ist, dass die flexible Kunststofffolie und damit auch die Registerkarten häufig nicht fest genug in der Vertiefung einliegen. Insbesondere beim Reinigen des Telekommunikationsgerätes wird häufig die durchsichtige flexible Kunststofffolie beschädigt oder entfernt, so dass auch die Registerkarte beschädigt oder beschmutzt werden kann. Geht die durchsichtige flexible Kunststofffolie unabsichtlich verloren, kann die Registerkarte nicht mehr sicher in der Vertiefung gehalten werden.

Aufgabe der Erfindung ist es, ein Telekommunikationsgerät mit einer dauerhaft sichern und einer einfachen Halterung für eine Registerkarte zu schaffen.

Diese Aufgabe wird durch ein Telekommunikationsgerät mit den Merkmalen des Anspruchs 1 gelöst. Ein Telekommunikationsgerät mit einem Gehäuse und mit einer Vorrichtung zu Halten einer Registerkarte, bei dem die Vorrichtung zumindest einen Schlitz in dem Gehäuse zur Aufnahme der Registerkarte aufweist, so dass die Registerkarte in das Gehäuse einschiebbar ist, stellt eine dauerhaft sichere und einfache Halterung für eine Registerkarte dar. Dadurch, dass die Registerkarte durch einen Schlitz in das Gehäuse des Telekommunikationsgerätes einschiebbar ist, ist diese sicher und fest in dem Telekommunikationsgerät gehalten. Die Registerkarte wird dabei derart unter das Gehäuse des Telekommunikationsgerätes geschoben, dass sie von einem Nutzer des Telekommunikationsgerätes betrachtet werden kann. In diesem Fall ist zumindest der Bereich des Gehäuses, unter dem die Registerkarte eingeschoben werden kann, transparent ausgebildet, so dass die Sicht auf die Registerkarte uneingeschränkt möglich ist. Der zumindest eine Schlitz ist vorzugsweise an der Seite des Telekommunikationsgerätes angeordnet, so dass die Registerkarte unter die Oberseite des Telekommunikationsgerätes, die der Nutzer des Telekommunikationsgerätes bei sachgerechter Benutzung betrachtet, einschiebbar ist. Jeder Zeile, d. h. jedem Namen oder jedem Zeichen, der Registerkarte ist eine Taste des Telekommunikationsgerätes zugeordnet, der jeweils eine gewünschte Telefonnummer zugeordnet werden kann. Die Tasten sind in der Nähe der Zeilen der Registerkarte angeordnet. Die Registerkarte sollte so viel Zeilen haben, wie das Telekommunikationsgerät entsprechende Tasten hat. Der Schlitz ist derart ausgebildet, dass eine Registerkarte durch den Schlitz in das Innere des Telekommunikationsgerätes einschiebbar ist.

Eine bevorzugte Ausführungsform des Telekommunikationsgerätes sieht vor, dass die Vorrichtung eine Aufnahme für die Registerkarte an der Innenseite der Gehäuseoberseite aufweist, so dass die Registerkarte an der Innenseite des Gehäuses, insbesondere an der Innenseite der Gehäuseoberseite, die dem Betrachter zugewandt ist, anordenbar ist. Die Aufnahme hält die Registerkarte an der Innenseite des Gehäuses, insbesondere an der Innenseite der Gehäuseoberseite, fest. Die Aufnahme kann ein Fach sein, in das die Registerkarte eingeschoben werden kann. Die Aufnahme ist derart dimensioniert, dass die Registerkarte nicht innerhalb der Aufnahme verrutschen kann. Fern kann die Aufnahme seitliche Führungen mit Nuten aufweisen, in denen die Seiten der Registerkarte geführt werden können. Entsprechend der Größe der Registerkarte kann die Größe der Aufnahme dimensioniert werden.

Von Vorteil ist es, wenn die Aufnahme einen Kartenhalter aufweist, der die Registerkarte gegen die Innenseite des Gehäuses drückt. Hierdurch kann die Karte fest gegen die Innenseite des Gehäuses des Telekommunikationsgerätes gedrückt werden. Der Kartenhalter sorgt für einen besonders festen und sicheren Sitz der Registerkarte in der Aufnahme. Ein Verrutschen der Registerkarte ist dann nicht mehr möglich. Der Kartenhalter ist parallel zur Gehäusewand, insbesondere parallel zur Gehäuseoberseite des Telekommunikationsgerätes angeordnet und weist idealerweise zumindest die Größe der Registerkarte auf. Hierdurch kann die Registerkarte überall gleichmäßig gegen die Innenseite des Gehäuses gedrückt werden. Damit der Kartenhalter die Registerkarte gegen die Innenseite des Gehäuses drücken kann, ist der Kartenhalter federnd an dem Telekommunikationsgerät gehalten.

Besonders vorteilhaft ist es, wenn der Kartenhalter an dem Gehäuse angeordnet ist. Hierdurch kann in Verbindung mit einer federnden Anordnung optimal Druck auf die Registerkarte ausgeübt werden. Der Kartenhalter kann beispielsweise an Befestigungselementen an der Innenseite des Gehäuses verrastet werden. Hierbei kann er so befestigt werden, dass er eine Federkraft auf die Registerkarte ausüben kann.

Eine andere bevorzugte Ausführungsform des Kartenhalters sieht vor, dass der Kartenhalter zumindest ein Federelement aufweist, das die Registerkarte an der Innenseite des Gehäuses, insbesondere an der Innenseite der Gehäuseoberseite, hält. D. h. an der Oberseite des Kartenhalters sind Federelemente angeordnet, die eine eingeschobene Registerkarte in Richtung der Innenseite des Gehäuses des Telekommunikationsgerätes drückt. Die Federkraft der Federelemente ist dabei derart dosiert, dass die Federelemente beim Einschieben der Registerkarte durch den Schlitz in die Aufnahme nachgeben und nach Loslassen der Registerkarte diese die Registerkarte gegen die Innenseite des Gehäuses drücken. Die Federelemente sind so ausgebildet, dass sie ein Einschieben der Registerkarte durch den Schlitz in die Aufnahme nicht behindern. Die Federelemente können beispielsweise längliche, über die gesamte Tiefe der Aufnahme bzw. des Kartenhalters verlaufende federnde Schienen sein.

Ferner bevorzugt ist ein Telekommunikationsgerät, bei dem das Gehäuse, insbesondere die Gehäuseoberseite, zumindest einen Durchbruch zur Draufsicht auf die Registerkarte, aufweist. Durch den Durchbruch kann der Nutzer des Telekommunikationsgerätes die Registerkarte betrachten. Bevorzugt sind mehrere Durchbrüche parallel zueinander in dem Gehäuse, insbesondere der Oberseite des Gehäuses des Telekommunikationsgerätes, angeordnet. Die zu beschriftenden Zeilen der Registerkarte weisen die gleiche Größe auf, wie die der Durchbrüche. Jedem Durchbruch ist eine Taste des Telekommunikationsgerätes zugeordnet. Die Registerkarte wird derart gegen die Innenseite des Gehäuses des Telekommunikationsgerätes gedrückt, dass jede Zeile der Registerkarte genau durch einen Durchbruch von einem Betrachter erkennbar ist. Die Durchbrüche weisen idealerweise die Form von Langlöchern auf. An einer oder an beiden Enden der Langlöcher sind die Tasten des Telekommunikationsgerätes angeordnet, denen jeweils eine Telefonnummer zugeordnet werden kann. Der Kartenhalter bzw. die Federelemente des Kartenhalters drücken die Registerkarte gegen die Innenseite des Gehäuses, so dass die Durchbrüche verschlossen sind. Ist keine Registerkarte in die Aufnahme eingeschoben, so verschließt der federnd gehaltene Kartenhalter die Durchbrüche, so dass keine Verunreinigungen in die Aufnahme gelangen können. Weist das Gehäuse Durchbrüche auf, so ist es nicht zwingend notwendig, dass das Gehäuse in dem Bereich der Registerkarte transparent ausgebildet ist. Die Sicht auf die Zeilen der Registerkarte gewährleisten dann die Durchbrüche.

Eine weitere vorteilhafte Ausführungsform des erfindungsgemäßen Telekommunikationsgerätes sieht vor, dass der Schlitz durch eine Klappe verschließbar ist. Hierdurch kann kein Schmutz in die Aufnahme der Registerkarte gelangen. Die Klappe ist verschieb- oder verschwenkbar an dem Telekommunikationsgerät, insbesondere an dem Gehäuse, gehalten.

Bevorzugt ist ferner ein Telekommunikationsgerät, bei dem an dem Schlitz ein Ausnehmung vorgesehen ist. Die Ausnehmung ist an einer oder beiden Schlitzkanten vorgesehen. Die Ausnehmung dient zum besseren Greifen der Registerkarte. Insbesondere kann eine in der Aufnahme steckende Registerkarte mit Hilfe der Ausnehmung gut durch zwei Finger gegriffen und durch den Schlitz aus der Aufnahme herausgezogen werden.

Eine weitere vorteilhafte Ausführungsform des erfindungsgemäßen Kommunikationsgerätes sieht vor, dass die Aufnahme durch den Schlitz aus dem Gehäuse des Telekommunikationsgerätes herausführbar oder herausschwenkbar ist. Ähnlich einer Schublade kann die Aufnahme aus dem Schlitz in dem Gehäuse des Telekommunikationsgerätes herausfahren, so dass die Registerkarte in die Aufnahme hineingelegt und dann mit der Aufnahme zusammen in das Innere des Telekommunikationsgerätes wieder eingeführt werden kann. Es kann ein Öffnungsmechanismus vorgesehen sein, bei dem die Aufnahme durch Betätigen eines Schalters oder Knopfes automatisch aus dem Schlitz herausfährt oder -schwenkt.

Bevorzugte Ausführungsformen der vorliegenden Erfindung werden nachfolgend unter Bezugnahme auf die beiliegenden Zeichnungen näher erläutert. Es zeigen:
- Figur 1: ein mobiles Kommunikationsgerät mit einem Schlitz zum Einführen einer Registerkarte;
- Figur 2: einen Schnitt durch ein mobiles Kommunikationsgerät mit einer an der Unterseite des Gehäuses des mobilen Kommunikationsgerätes angeordneten Registerkarte.

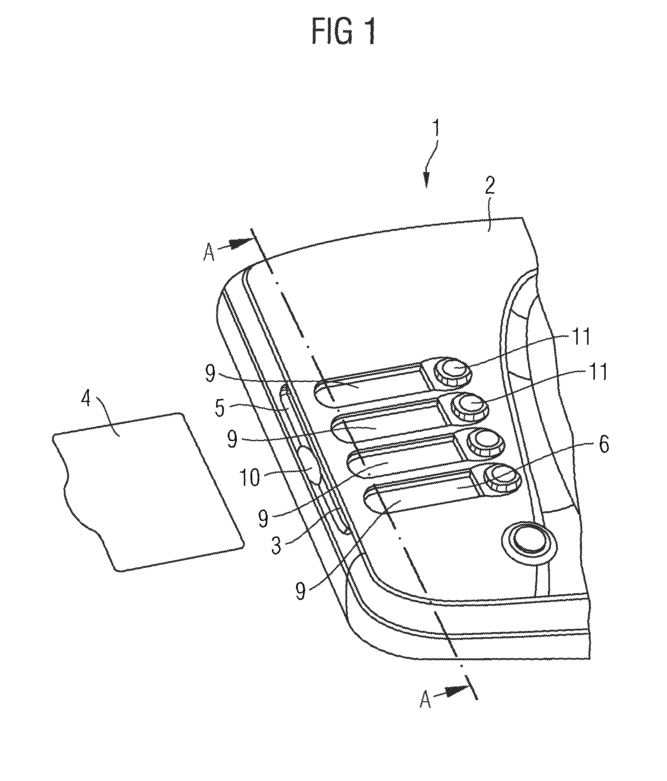

Fig. 1 zeigt einen Teil eines mobilen Kommunikationsgerätes 1 mit einer Vorrichtung 3 zum Halten einer Registerkarte 4. Das mobile Kommunikationsgerät 1 weist an der Seite des Gehäuses 2 einen Schlitz 5 auf, durch den eine Registerkarte 4 in das Innere des mobilen Kommunikationsgerätes 1 einschiebbar ist. Die beschriftbare Oberseite der Registerkarte 4 kann durch die Durchbrüche 9 in der Gehäuseoberseite des mobilen Kommunikationsgerätes 1 betrachtet werden. Jedem Durchbruch 9 ist eine sogenannte Zielwahltaste 11 zugeordnet. Durch einfaches Drücken einer Zielwahltaste 11 wird die der Zielwahltaste 11 zugeordnete Telefonnummer angewählt. Jeder Zielwahltaste 11 kann eine Telefonnummer zugeordnet werden.

Diese Telefonnummer kann jederzeit verändert oder gelöscht werden. Der Schlitz 5 ist derart ausgebildet, dass die Registerkarte 4 genau in den Schlitz 5 einschiebbar ist. Unterhalb der Durchbrüche 9 ist eine Aufnahme 6 für die Registerkarte 4 vorgesehen. Die Registerkarte 4 wird durch den Schlitz 5 in die Aufnahme 6 geschoben, so dass sie dort fest angeordnet ist. Die Aufnahme 6 ist derart ausgebildet, dass die Registerkarte 4 formgenau in der Ausnahme 6 einliegen kann. Die Aufnahme 6 ist eine Art Fach, in das die Registerkarte 4 einschiebbar ist. An dem Schlitz 5 ist eine zusätzliche Ausnehmung 10 vorgesehen, durch die die Registerkarte 4 besser greifbar wird, wenn sie in der Aufnahme 6 einliegt.

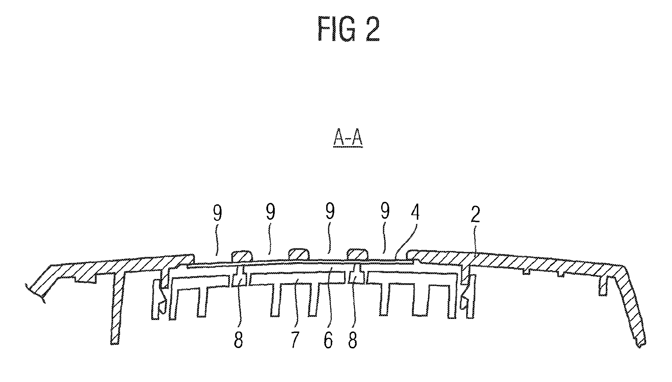

In der Fig. 2 ist ein Querschnitt durch das Telekommunikationsgerät 1 gemäß der Linie A-A in Fig. 1 dargestellt. Das Gehäuse 2 weist mehrere Durchbrüche 9 auf, durch die eine eingeschobene Registerkarte 4 von einem Nutzer des Telekommunikationsgerätes 1 betrachtet werden kann. Die Registerkarte 4 wird durch einen Kartenhalter 7, der Federelemente 8 aufweist, gegen die Innenseite des Gehäuses 2 gedrückt, so dass die Registerkarte 4 die Durchbrüche 9 verschließt. Der Kartenhalter 7 ist an dem Gehäuse 2 des Telekommunikationsgerätes 1 angeordnet, insbesondere verrastet. Beim Einschieben der Registerkarte 4 durch den Schlitz 5 in die Aufnahme 6 werden die Federelemente 8 durch die Registerkarte 4 zunächst zurückgedrängt. Nach dem Einschieben der Registerkarte 4 in die Aufnahme 6 drücken die Federelemente 8 des Kartenhalters 7 die Registerkarte 4 gegen die Innenseite des Gehäuses 2, wodurch diese fest in der Aufnahme 6 sitzt. Der Kartenhalter 7 kann derart federnd an dem Gehäuse 2 des Telekommunikationsgerätes 1 angeordnet sein, dass er auch eine Kraft in Richtung der Gehäuseinnenseite ausübt. Die Federelemente 8 können längliche Schienen sein, die im Bereich des Schlitzes 5 abgeflacht sind, so dass die Registerkarte 4 mühelos in die Aufnahme 6 geschoben werden kann.

Die Erfindung ist besonders für Tischtelefone oder Faxgeräte geeignet.

## Patentansprüche

1. Telekommunikationsgerät (1) mit einem Gehäuse (2) und mit einer Vorrichtung (3) zu Halten einer Registerkarte (4) **dadurch gekennzeichnet, dass** die Vorrichtung (3) zumindest einen Schlitz (5) in dem Gehäuse (2) zur Aufnahme der Registerkarte (4) aufweist, so dass die Registerkarte (4) in das Gehäuse (2) einschiebbar ist.

2. Telekommunikationsgerät (1) nach Anspruch 1, **dadurch gekennzeichnet, dass** die Vorrichtung (3) eine Aufnahme (6) für die Registerkarte (4) an der Innenseite der Gehäuseoberseite aufweist, so dass die Registerkarte (4) an der Innenseite des Gehäuses (2), insbesondere an der Innenseite der Gehäuseoberseite, die dem Betrachter zugewandt ist, anordenbar ist.

3. Telekommunikationsgerät (1) nach Anspruch 1 oder 2, **dadurch gekennzeichnet, dass** die Aufnahme (6) einen Kartenhalter (7) aufweist, der die Registerkarte (4) gegen die Innenseite des Gehäuses (2) drückt.

4. Telekommunikationsgerät (1) nach Anspruch 3, **dadurch gekennzeichnet, dass** der Kartenhalter (7) an dem Gehäuse (2) angeordnet ist.

5. Telekommunikationsgerät (1) nach einem der vorherigen Ansprüche 3 oder 4, **dadurch gekennzeichnet, dass** der Kartenhalter (7) zumindest ein Federelement (8) aufweist, das die Registerkarte an der Innenseite des Gehäuses (2), insbesondere an der Innenseite der Gehäuseoberseite, hält.

6. Telekommunikationsgerät (1) nach einem der vorherigen Ansprüche, **dadurch gekennzeichnet, dass** das Gehäuse (2), insbesondere die Gehäuseoberseite, zumindest einen Durchbruch (9) zur Draufsicht auf die Registerkarte (4), aufweist.

7. Telekommunikationsgerät (1) nach Anspruch 6, **dadurch gekennzeichnet, dass** der zumindest eine Durchbruch (9) durch den Kartenhalter (7) verschließbar ist.

8. Telekommunikationsgerät (1) nach einem der vorherigen Ansprüche 1 bis 5, **dadurch gekennzeichnet, dass** das Gehäuse (2) des Telekommunikationsgerätes (1) transparent ist.

9. Telekommunikationsgerät (1) nach einem der vorherigen Ansprüche, **dadurch gekennzeichnet, dass** der Schlitz (5) durch eine Klappe verschließbar ist.

10. Telekommunikationsgerät (1) nach einem der vorherigen Ansprüche, **dadurch gekennzeichnet, dass** an dem Schlitz (5) ein Ausnehmung (10) vorgesehen ist.

11. Telekommunikationsgerät (1) nach einem der vorherigen Ansprüche, **dadurch gekennzeichnet, dass** die Aufnahme (6) durch den Schlitz (5) aus dem Gehäuse (2) des Telekommunikationsgerätes (1) herausführbar oder herausschwenkbar ist.
